# EUROPEAN PATENT SPECIFICATION

(11) **EP 3 165 979 B1**
(45) Date of publication and mention of the grant of the patent: **30.12.2020**
(21) Application number: 15193133.4
(22) Date of filing: 05.11.2015
(51) Int. Cl.: G05B 19/418

(54) **PROVIDING MOUNTING INFORMATION**
BEREITSTELLUNG VON MONTAGEINFORMATIONEN
FOURNITURE D'INFORMATIONS DE MONTAGE

(43) Date of publication of application: 10.05.2017
(73) Proprietor: Rohde & Schwarz GmbH & Co. KG, 81671 München (DE)
(72) Inventor: STERZBACH, Bernhard, 81541 München (DE)
(74) Representative: Isarpatent

(56) References cited:
- EP-A1- 2 405 402
- WO-A1-2015/006334
- US-A1- 2013 278 635
- PATHOMAREE N ET AL: "Augmented reality for skill transfer in assembly task", ROBOT AND HUMAN INTERACTIVE COMMUNICATION, 2005. ROMAN 2005. IEEE INTE RNATIONAL WORKSHOP ON NASHVILLE, TN, USA AUG. 13 - 15 2005, PISCATAWAY, NJ, USA,IEEE, 13 August 2005 (2005-08-13), pages 500-504, XP010839410, ISBN: 978-0-7803-9274-8
- Jose Molineros: "COMPUTER VISION AND AUGMENTED REALITY FOR GUIDING ASSEMBLY", , 31 May 2002 (2002-05-31), XP055272043, Retrieved from the Internet: URL:https://etda.libraries.psu.edu/paper/5 942/1209 [retrieved on 2016-05-11]

## Description

### TECHNICAL FIELD

The invention relates to an information system and a method for providing mounting information for a number of connectable devices and electrical devices to a user.

### BACKGROUND

The present invention is applicable to any system that uses cable connections between different electrical devices, like network equipment, e.g. for mobile phone testing, patch bays for data networks, and audio / video cabling in television studios or on stages for connecting music instruments and effect devices or the like. Nevertheless, the present invention will mainly be described in combination with measurement devices like, e.g. oscilloscopes and network testers.

There are a variety of applications where complex test installations have to be built up e.g. by a service technician. On example of such an application is the development and commissioning of mobile network equipment, e.g. for mobile phone networks. In such installations a multitude of cables have to be connected between the mobile network equipment and a plurality of measurement and analysis devices. Furthermore, in an already installed system it can be useful to identify all installed cables and the respective cable characteristics. Document US 2013 / 0 278 635 A1 discloses an augmented reality system, that aids a user in assembling components of a system.

### SUMMARY

Accordingly, there is a need for an improved support during the complex installation of a plurality of cables between electrical devices.

Consequently, the present invention provides an information system with the features of claim 1 and a method with the features of claim 8.

The information system provides the user with an augmented display of the scene recorded with the camera. The term camera in this regard refers to every device capable of recording an image of a scene. The camera can e.g. be a CMOS-Camera, a 3D-Camera or the like. The scene is augmented with specific mounting information about connectable devices, like e.g. cables or calibration standards, or receptacles identified in the scene. The specific mounting information can e.g. comprise information about the direction in which the receptacle for a connectable device is located. If a receptacle and a connectable device are located in the scene the processing device can also display information about whether the connectable device should be plugged into the visible receptacle or into another receptacle. If more than one receptacle is identified in the scene the processing device can also display mounting information about the correct receptacle into which the connectable device should be plugged in.

The information system therefore provides a user with detailed instructions about mounting of the respective connectable devices. The user doesn't need to study any instructions or detailed cabling plans to be able to e.g. connect a plurality of cables between two electrical devices, like e.g. measurement devices.

Further embodiments of the present invention are subject of the further subclaims and of the following description, referring to the drawings.

In a possible embodiment the processing device can be configured to identify the electrical devices and/or connectable devices and/or receptacles by identifying an optical code on the connectable devices and/or receptacles. Furthermore, the information system can comprise a database configured to store for every optical code the mounting information of the respective connectable device and/or receptacle. The optical code can e.g. be a bar code, a QR-code or any other code which can be decoded by the processing device. Using an optical code allows easily identifying the single connectable devices and receptacles and differentiating connectable devices and receptacles even within a large number of connectable devices and receptacles. For example on a connectable device end, e.g. a cable end, a one dimensional barcode can be used, which is wound around the cable end, and can thus be viewed from all directions. The optical code can comprise not only an identification number for the respective electrical devices and/or connectable devices and/or receptacles. Instead the optical code can also comprise for the electrical devices and/or connectable devices and/or receptacles the type, the serial number, a relative position information e.g. for a receptacle in relation to a housing of the electrical device, or the like. All this information can be stored for later use by the processing device in the database. As an alternative or in addition the processing device can access a central database and retrieve the mounting information and the information listed above corresponding to the respective electrical devices, connectable devices and receptacles based on an ID of the respective electrical devices, connectable devices and receptacles.

According to the invention the information system comprises a position sensor configured to identify the position and orientation of the camera in three dimensional space, wherein the processing device is configured to determine the position of the electrical devices and/or the identified connectable devices and/or the identified receptacles. Furthermore the processing device is configured to display the mounting information at the position of the respective identified connectable devices and/or the respective identified receptacles on the display. The position sensor can be a relative or an absolute position sensor. That means that the information system is capable of tracking the camera position and orientation and of calculating the positions of connectable devices and receptacles with respect to the camera. This allows not only displaying the mounting information in the display at the position of the respective connectable devices and/or receptacles. It also allows moving the displayed information if the camera is moved, such that the information is always displayed near the respective connectable devices and/or receptacles.

In one embodiment the position sensor is embodied as virtual relative position sensor which based on the recorded camera images calculates the position of the camera relative to the electrical devices, connectable devices and receptacles. This type of sensor can e.g. use image or pattern analysis algorithms to detect the electrical devices, connectable devices and receptacles and their relative positions as well as the camera position. The position sensor can e.g. analyse the images recorded by the camera and generate a 3D representation of the scenes using consecutively recorded images. Furthermore, the position sensor can analyse which electrical devices, connectable devices and receptacles are visible in a scene and based on their geometrically distorted appearances in the image and on their known shapes and dimensions, draw a conclusion about their positions and the camera position.

In a further possible embodiment the processing device can be configured to indicate with the mounting information of a connectable device the direction in which the respective receptacle is located, if the respective receptacle for the connectable device was already identified. In addition or as an alternative the processing device can be configured to indicate with the mounting information of a receptacle the direction in which the respective connectable device is located if the respective connectable device for the receptacle was already identified. This allows indicating to a user where a connectable device has to be mounted, even if the respective receptacle is at the moment not visible in the display. While the camera moves, the processing device can keep track of the movement and overlay respective mounting information over a scene, if the respective receptacle comes into view. This means that a user can first look with the camera at a connectable device and the processing device will identify the connectable device. The user can then look around with the camera in the direction indicated by the mounting information displayed with the connectable device. As soon as the respective receptacle comes into view the user will be alerted by further respective mounting information.

According to the invention the processing device is configured to calculate for all identified electrical devices and/or the identified connectable devices and/or the identified receptacles the distance between the respective receptacles which have to be connected by a connectable device and verify if the connectable device which is provided to connect the respective receptacles is at least as long as the calculated distance. By identifying the positions of all identified electrical devices, connectable devices, and receptacles it becomes possible to check in advance if e.g. the cable provided for connecting e.g. two different electrical devices are long enough. This information can be provided to the user such that the user can move the electrical devices or supply longer cables if necessary.

In a further possible embodiment the processing device can be configured to mark a connectable device and/or a receptacle which is positioned by the user in the middle of the camera view as active connectable device and/or receptacle, and the processing device can be configured to display mounting information only for the active connectable device and/or receptacle. By reducing the amount of displayed mounting information, the complexity of the displayed image is greatly reduced and the computations needed to place the mounting information are reduced. Furthermore, the understanding of the mounting information for a user is enhanced by the simplification and by the focusing on a single connectable device or receptacle. In one embodiment the connectable device and/or a receptacle which is positioned by the user in the middle of the camera view is only temporarily marked as active until the user confirms the selection. Only after the user confirms the selection is the connectable device and/or a receptacle definitely marked as active.

In a further possible embodiment the processing device can be configured to subsequently store information about all connected connectable devices and/or receptacles which have been mounted using the information system. Furthermore, the processing device can be configured to display in the display a list of connectable devices which are not yet connected. The processing device can e.g. derive from the information about the type of electrical devices which should be connected the number and type of connectable devices needed. The connectable devices which are installed are marked as mounted. The user can at any moment request a list of the connectable devices not yet mounted and the processing device can generate such a list from the information about the type of electrical devices and the information about the connectable devices which are marked as mounted. This not only facilitates to the user the mounting of the connectable devices but also allows automatically assessing whether the electrical devices are connected to each other correctly.

In a further possible embodiment the information system can comprise a communication interface which is coupled to the processing device. Furthermore, the processing device can be configured to transmit via the communication interface information about the connectable devices which already are connected to one of the electrical devices to said electrical device. The information which is transmitted to the electrical device can e.g. comprise the type of connectable device, information about the high frequency properties, like e.g. damping characteristics, of the connectable device or the like. This information can then be used by the electrical device, e.g. a measurement equipment, to adapt the input circuits or the digital data acquisition and manipulation accordingly.

In a further possible embodiment the information system can comprise a diagnosis unit configured to inspect if all connectable devices have been connected to the correct receptacles. Furthermore, the processing device can be configured to indicate in the display movement directions in which the camera has to be moved by the user in order for the processing device to generate a list with all electrical devices and/or connectable devices and/or receptacles into which connectable devices have been mounted after the connectable devices have been mounted, wherein the diagnosis unit can be configured to inspect if all connectable devices have been connected to the correct receptacles based on said list. After the user completes the mounting procedure the processing unit can start a diagnosis session and indicate to the user all viewing positions necessary to detect all connectable devices and receptacles. The processing unit can e.g. derive from the distance between the optical code of a connectable device and the optical code of a receptacle if the connectable device is connected to the receptacle. The list with the connected connectable devices can then automatically be parsed by the diagnosis unit and erroneous connections can be identified. For documentation purposes the processing unit can also automatically store a picture of the respective connectable devices, the receptacles or the connections between the connectable devices and the receptacles.

In a further possible embodiment the information system can be coupled with the electrical devices and receive measurement values from the respective electrical devices. The measurement values can e.g. be measurement values taken at specific receptacles of the electrical devices after a connectable device has been connected to the receptacle. This allows the information system to analyse e.g. a cable connected to a receptacle and identify defective cables, which can then be marked in the display and easily be exchanged by a user.

In a further possible embodiment the information system can be coupled with the electrical devices and receive information about connectable devices which are being in use at the moment of the information transmission. This information can be displayed together with the respective connectable device when it is in view of the camera. This allows the user e.g. to identify unused cables which can be disconnected or exchanged. Furthermore, status information about the electrical devices can be transmitted to the information system, which can also be displayed to a user.

In a further possible embodiment a number, i.e. one or more, of information systems according to the present invention can be combined and configured to exchange mounting data. This allows e.g. to coordinate different users which work on the same construction but in remote locations.

In a further possible embodiment camera images, with or without overlay information, and further mounting information or data of the information system can be forwarded e.g. to a user or a central service station, where the working on the electrical devices, connectable devices and receptacles can be supervised and supported.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of an information system according to the present invention,
- Fig. 2: shows a flow diagram of an embodiment of a method according to the present invention,
- Fig. 3: shows a block diagram of another embodiment of an information system according to the present invention, and
- Fig. 4: shows a flow diagram of another embodiment of a method according to the present invention.

The enclosed drawings are intended to provide further understanding of the embodiments of the invention. They illustrate embodiments and, in conjunction with the description, serve to explain principles and concepts of the invention. Other embodiments and many of the stated advantages can be found from the drawings. The elements of the drawings are not necessarily shown in scale with one another.

In the figures of the drawing, any elements and components that are identical, have the same function and work in the same way, are each given the same reference signs, unless stated otherwise.

### DETAILED DESCRIPTION OF THE DRAWINGS

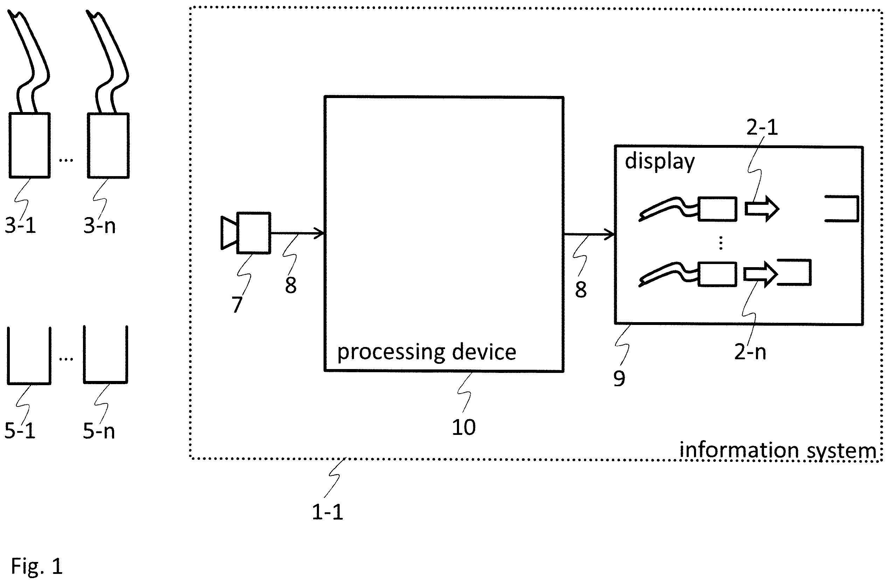

Fig. 1 shows a block diagram of an embodiment of an information system 1-1 with a camera 7, a processing device 10 and a display 9.

The camera 7 is configured to record a scene 8 and transmit the data regarding the recorded scene 8 to the processing device 10. The processing device 10 in turn is configured to enhance the recorded scene 8 with additional mounting information 2-1 - 2-n and display the enhanced scene 8 in the display 9.

In front of the camera 7 there are shown two connectable devices embodied as cable connectors 3-1 and 3-n. Furthermore, together with the cable connectors 3-1 and 3-n respective receptacles 5-1 and 5-n are shown. Possible further connectable devices and receptacles are hinted at by three dots. The connectors 3-1 and 3-n and the receptacles 5-1 and 5-n represent a stylised version of a real scene which could be recorded by the camera 7 in a real application situation.

In order to enhance the scene 8 for displaying to a user, the processing device 10 identifies in the scene 8 the connectors 3-1 and 3-n and the corresponding receptacles 5-1 and 5-n. The identification can be based on optical pattern or image recognition techniques, RFID, or the like. After identifying the single connectors 3-1 and 3-n and receptacles 5-1 and 5-n the processing device 10 includes the respective mounting information 2-1 and 2-n as overlay in the scene 8 and displays in the display 9 the scene 8 together with the mounting information 2-1 and 2-n.

The processing device 10, the camera 7 and the display 9, as well as further elements shown in combination with other embodiments of the information system 1-1, can be included in a single device, like a smartphone, a PDA, a tablet PC or the like. In another embodiment the elements of the information system 1-1 can be distributed over a variety of devices. For example the camera 7 and the display 9 could be included in a head mounted system and the processing device 10 could be provided in a computer connected to the head mounted system. Every other partitioning of the elements of the information system 1-1 is also covered by this patent application.

Providing mounting information 2-1 - 2-n for all presently visible connectable devices 3-1 - 3-n and/or receptacles 5-1 - 5-n can clutter the display 9 with too much information to be comfortably used by the user for mounting the connectable devices 3-1 - 3-n and/or receptacles 5-1 - 5-n. In order to simplify the mounting of the connectable devices 3-1 - 3-n for the user, the processing device 10 can mark as active a connectable device 3-1 - 3-n and/or a receptacle 5-1 - 5-n which is positioned by the user in the middle of the camera view or the scene 8.

Until the active connectable device 3-1 - 3-n and/or receptacle 5-1 - 5-n is finally mounted by the user the processing device 10 displays mounting information 2-1 - 2-n only for the active connectable device 3-1 - 3-n and/or receptacle 5-1 - 5-n.

Furthermore, to supervise the overall progress of the mounting process the processing device 10 can subsequently store information about all connected connectable devices 3-1 - 3-n and/or receptacles 5-1 - 5-n which have been mounted using the information system 1-1. It is then possible to display, e.g. in the display 9 or the display of a related computer, a list of connectable devices 3-1 - 3-n which are not yet connected. It is also possible to audibly or visually indicate to a user that all connectable devices 3-1 - 3-n have been mounted.

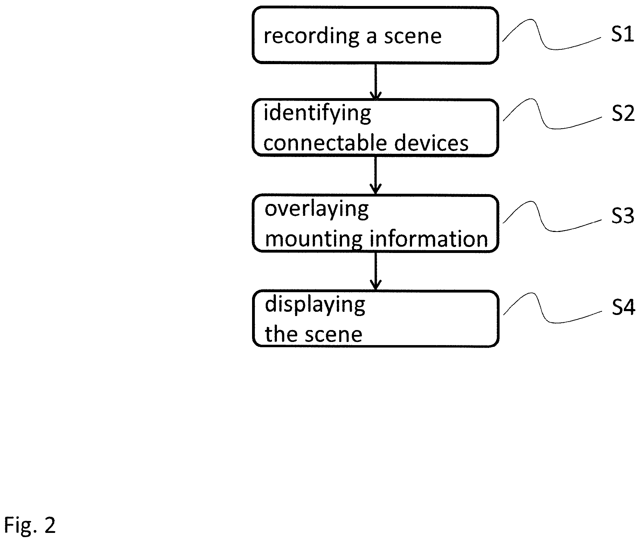

Fig. 2 shows a flow diagram of an embodiment of a method for providing mounting information 2-1 - 2-n for a number of connectable devices 3-1 - 3-n and electrical devices 4-1 - 4-n to a user.

The method starts with recording S1 a scene 8 with the camera 7. In a second step a number of connectable devices 3-1 - 3-n and/or receptacles 5-1 - 5-n in the scene 8 are identified S2. Following the identification of connectable devices 3-1 - 3-n and/or receptacles 5-1 - 5-n the scene 8 is overlaid S3 with mounting information 2-1 - 2-n for the respective connectable devices 3-1 - 3-n and/or receptacles 5-1 - 5-n. Finally, the scene 8 is displayed S4 with the overlay information 2-1 - 2-n in a display 9 for a user to use the overlay information 2-1 - 2-n to mount the connectable devices 3-1 - 3-n in the correct receptacles 5-1 - 5-n.

Tracking the mounting process can be supported by storing information about all connected connectable devices 3-1 - 3-n and/or receptacles 5-1 - 5-n which have been mounted. This allows displaying a list of connectable devices 3-1 - 3-n which are not yet connected, and to notify a user when all connectable devices 3-1 - 3-n have been mounted.

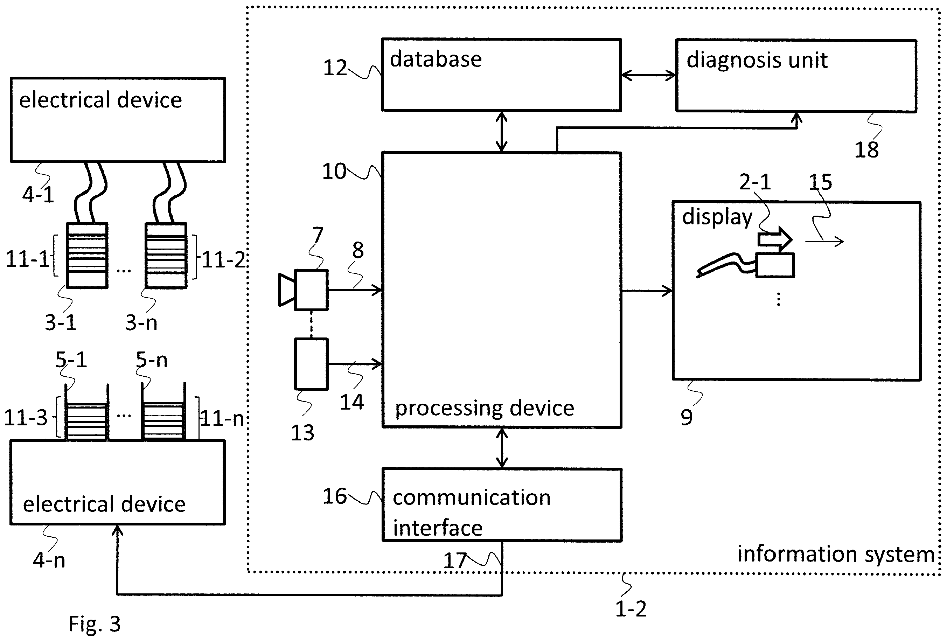

Fig. 3 shows a block diagram of another embodiment of an information system 1-2 according to the present invention which extends the information system 1-1 of Fig. 1 with further features.

The processing device 10 of the information system 1-2 is configured to identify the electrical devices 4-1 - 4-n, connectable devices 3-1 - 3-n and/or receptacles 5-1 - 5-n by identifying an optical code 11-1 - 11-n on the connectable devices 3-1 - 3-n and/or receptacles 5-1 - 5-n. In Fig. 3 the optical codes are barcodes 11-1 - 11-n which are circumferentially attached to the connectable devices 3-1 - 3-n and/or receptacles 5-1 - 5-n. Such a barcode arrangement can easily be detected and deciphered from any viewing angle and therefore allows an easy identification of the connectable devices 3-1 - 3-n and/or receptacles 5-1 - 5-n.

Furthermore, the information system 1-2 comprises in addition to the camera 7, the processing device 10 and the display 9 a database 12, a position sensor 13, a communication interface 17 and a diagnosis unit 18 which are all coupled to the processing device 10.

The database 12 is used to store for every optical code 11-1 - 11-n the mounting information 2-1 - 2-n of the respective connectable device 3-1 - 3-n and/or receptacle 5-1 - 5-n. The mounting information 2-1 - 2-2 can be pre-stored in the database 12 or can be dynamically loaded by the processing device 10 e.g. from a central database (not shown). Such a central database can e.g. be hosted on a server which is accessible over the internet.

After identifying the single connectable device 3-1 - 3-n and/or receptacle 5-1 - 5-n the processing device 10 can then display the mounting information 2-1 - 2-n at the position of the respective identified connectable devices 3-1 - 3-n and/or the respective identified receptacles 5-1 - 5-n on the display 9.

Furthermore, in the database 12 the processing device 10 can store the information about all connected connectable devices 3-1 - 3-n and/or receptacles 5-1 - 5-n which have been mounted using the information system 1-1 to track the mounting progress as already explained above.

The position sensor 13 can be used by the processing device 10 to identify the position and/or orientation 14 of the camera 7 in three dimensional space. This information can be used by the processing device 10 to determine the position of the electrical devices 4-1 - 4-n, the identified connectable devices 3-1 - 3-n and/or the identified receptacles 5-1 - 5-n. The processing device 10 can e.g. use a method like dead reckoning to calculate and follow the position of the camera 7. Based on a known camera position the processing device can then also calculate the positions of the electrical devices 4-1 - 4-n, the identified connectable devices 3-1 - 3-n and/or the identified receptacles 5-1 - 5-n.

Knowing the exact location of connectable devices 3-1 - 3-n and of the respective receptacle 5-1 - 5-n the processing device 10 can indicate with the mounting information 2-1 - 2-n of a connectable device 3-1 - 3-n the direction 15 in which the respective receptacle 5-1 - 5-n is located or vice versa. This is especially useful if either the receptacle 5-1 - 5-n for a visible connectable device 3-1 - 3-n or the connectable device 3-1 - 3-n for a visible receptacle 5-1 - 5-n is not visible in the scene 8.

Furthermore, knowing the location of connectable devices 3-1 - 3-n and the receptacles 5-1 - 5-n the processing device 10 calculates for all identified electrical devices 4-1 - 4-n, connectable devices 3-1 - 3-n and/or receptacles 5-1 - 5-n the distance between the respective receptacles 5-1 - 5-n which have to be connected by a connectable device 3-1 - 3-n, like a cable, and verify if the cable 3-1 - 3-n which is provided to connect the respective receptacles 5-1 - 5-n is at least as long as the calculated distance.

In Fig. 3 the communication interface 16 couples the processing device 10 with the electrical device 4-n. Via this connection the processing device 10 transmits information 17 about the connectable devices 3-1 - 3-n to the electrical device 4-n. Such information can e.g. comprise information about the used cables like resistances, RF characteristics and the like. This allows the electrical device 4-n to verify if e.g. the correct cables have been connected to the electrical device 4-n. Furthermore, if the electrical device 4-n has the capability to adapt its interfaces to different cables the electrical device 4-n can use the information 17 to adapt its interfaces correspondingly.

Finally the information system 1-2 comprises a diagnosis unit 18 which inspects if all connectable devices 3-1 - 3-n have been connected to the correct receptacles 5-1 - 5-n.

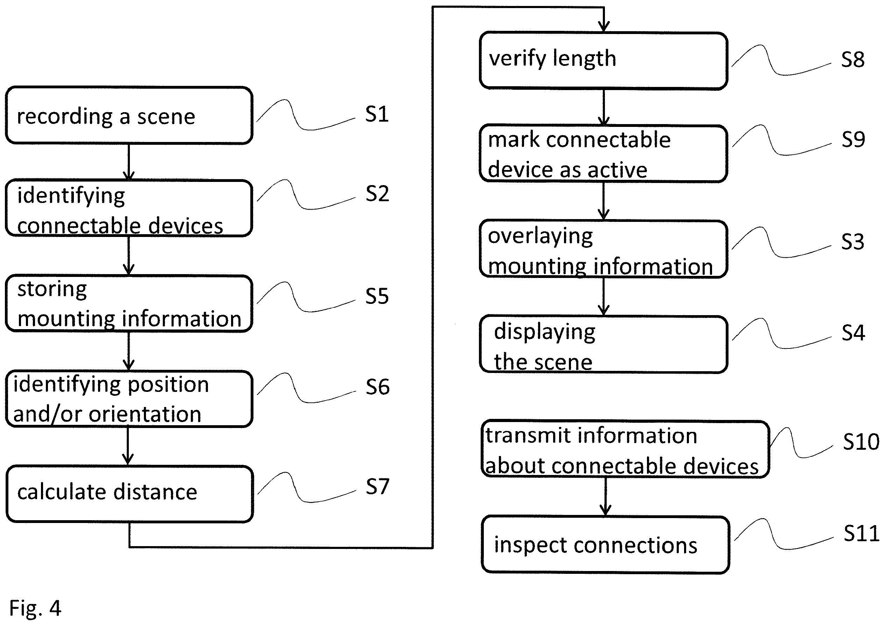

Fig. 4 shows a flow diagram of another embodiment of a method according to the present invention. The method of Fig. 4 is based on the method of Fig. 2 and comprises method steps S5 - S9 between method steps S2 and S3, and comprises method steps S10 and S11 after method step S4.

In order to simplify the identification step S2, the step of identifying S2 comprises identifying the electrical devices 4-1 - 4-n, connectable devices 3-1 - 3-n and/or receptacles 5-1 - 5-n by identifying an optical code 11-1 - 11-n on the connectable devices 3-1 - 3-n and/or receptacles 5-1 - 5-n. After the identification step S2 the method further comprises storing S5 for every optical code 11-1 - 11-n the mounting information 2-1 - 2-n of the respective connectable device 3-1 - 3-n and/or receptacle 5-1 - 5-n for further use.

To improve the mounting information 2-1 - 2-n with extra directional indications in step S6 the position and/or orientation 14 of the camera 7 in three dimensional space is determined. Furthermore, the position of the electrical devices 4-1 - 4-n, the identified connectable devices 3-1 - 3-n and/or the identified receptacles 5-1 - 5-n is extracted from the images recorded by the camera 7 together with the known camera position. If the positions of electrical devices 4-1 - 4-n, the identified connectable devices 3-1 - 3-n and/or the identified receptacles 5-1 - 5-n are known, with the mounting information 2-1 - 2-n of a connectable device 3-1 - 3-n the direction 15 in which the respective receptacle 5-1 - 5-n or connectable device 3-1 - 3-n is located can be displayed to help the user find the respective receptacle 5-1 - 5-n or connectable device 3-1 - 3-n.

In step S7 for all identified electrical devices 4-1 - 4-n, identified connectable devices 3-1 - 3-n and/or identified receptacles 5-1 - 5-n the distance between the respective receptacles 5-1 - 5-n which have to be connected by a connectable device 3-1 - 3-n, i.e. a cable, is calculated. The information about the single connectable devices 3-1 - 3-n deduced from the optical code 11-1 - 11-n can e.g. comprise the length of the respective cable. Based on the calculated distance and the known length it is verified in step S8 if the cable 3-1 - 3-n which is provided to connect the respective receptacles 5-1 - 5-n is at least as long as the calculated distance. If not, this fact can be displayed to the user, who can then select another cable.

To facilitate handling of the connectable devices 3-1 - 3-n a connectable device 3-1 - 3-n or a receptacle 5-1 - 5-n which is positioned by the user in the middle of the camera view and/or scene 8 is marked in step S9 as active connectable device 3-1 - 3-n or receptacle 5-1 - 5-n. From this moment on mounting information 2-1 - 2-n is displayed only for the active connectable device 3-1 - 3-n or receptacle 5-1 - 5-n until it is connected or another connectable device 3-1 - 3-n or another receptacle 5-1 - 5-n is selected as active. Finally in step S11 it is inspected if all connectable devices 3-1 - 3-n have been connected to the correct receptacles 5-1 - 5-n. To facilitate this step in the display movement directions can be indicated in which the camera 7 has to be moved by the user in order to generate a list with all electrical devices 4-1 - 4-n, connectable devices 3-1 - 3-n and/or receptacles 5-1 - 5-n into which connectable devices 3-1 - 3-n have already been mounted. Based on the acquired information it is then inspected if all connectable devices 3-1 - 3-n have been connected to the correct receptacles 5-1 - 5-n.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 1-1, 1-2: information system
- 2-1 - 2-n: mounting information
- 3-1 - 3-n: connectable device
- 4-1 - 4-n: electrical device
- 5-1 - 5-n: receptacle

- 7: camera
- 8: scene
- 9: display
- 10: processing device
- 11-1 - 11-n: optical code
- 12: database
- 13: position sensor
- 14: position and/or orientation
- 15: direction
- 16: communication interface
- 17: information
- 18: diagnosis unit

- S1 - S11: method steps

## Claims

1. Information system (1-1, 1-2) for providing mounting information (2-1 - 2-n) for a number of connectable devices (3-1 - 3-n) and electrical devices (4-1 - 4-n) to a user, comprising:
a camera (7) configured to record a scene (8),
a display (9),
a processing device (10) coupled to the camera (7) and the display (9) and configured to display the scene (8) in the display (9), and to identify in the scene (8) a number of connectable devices (3-1 - 3-n) and/or receptacles (5-1 - 5-n), and to overlay the scene (8) in the display (9) with mounting information (2-1 - 2-n) for the identified connectable devices (3-1 - 3-n) and/or the identified receptacles (5-1 - 5-n), and
a position sensor (13) configured to identify the position and/or orientation (14) of the camera (7) in three dimensional space,
wherein the processing device (10) is configured to determine the position of the electrical devices (4-1 - 4-n) and/or the identified connectable devices (3-1 - 3-n) and/or the identified receptacles (5-1 - 5-n),
wherein the processing device (10) is configured to display the mounting information (2-1 - 2-n) at the position of the respective identified connectable devices (3-1 - 3-n) and/or the respective identified receptacles (5-1 - 5-n) on the display (9), and
**characterised in that** the processing device (10) is configured to calculate for all identified electrical devices (4-1 - 4-n) and/or the identified connectable devices (3-1 - 3-n) and/or the identified receptacles (5-1 - 5-n) the distance between the respective receptacles (5-1 - 5-n) which have to be connected by a connectable device (3-1 - 3-n) and verify prior to mounting if the connectable device (3-1 - 3-n) which is provided to connect the respective receptacles (5-1 - 5-n) is at least as long as the calculated distance.

2. Information system according to claim 1,
wherein the processing device (10) is configured to identify the electrical devices (4-1 - 4-n) and/or connectable devices (3-1 - 3-n) and/or receptacles (5-1 - 5-n) by identifying an optical code (11-1 - 11-n) on the connectable devices (3-1 - 3-n) and/or receptacles (5-1 - 5-n),
wherein the information system (1-1, 1-2) comprises a database (12) configured to store for every optical code (11-1 - 11-n) the mounting information (2-1 - 2-n) of the respective connectable device (3-1 - 3-n) and/or receptacle (5-1 - 5-n).

3. Information system according to claim 1,
wherein the processing device (10) is configured to indicate with the mounting information (2-1 - 2-n) of a connectable device (3-1 - 3-n) the direction (15) in which the respective receptacle (5-1 - 5-n) is located if the respective receptacle (5-1 - 5-n) for the connectable device (3-1 - 3-n) was already identified, and/or
wherein the processing device (10) is configured to indicate with the mounting information (2-1 - 2-n) of a receptacle (5-1 - 5-n) the direction (15) in which the respective connectable device (3-1 - 3-n) is located if the respective connectable device (3-1 - 3-n) for the receptacle (5-1 - 5-n) was already identified.

4. Information system according to any one of the preceding claims,
wherein the processing device (10) is configured to mark a connectable device (3-1 - 3-n) and/or a receptacle (5-1 - 5-n) which is positioned by the user in the middle of the camera view and/or scene (8) as active connectable device (3-1 - 3-n) and/or receptacle (5-1 - 5-n), and
wherein the processing device (10) is configured to display mounting information (2-1 - 2-n) only for the active connectable device (3-1 - 3-n) and/or receptacle (5-1 - 5-n).

5. Information system according to any one of the preceding claims,
wherein the processing device (10) is configured to subsequently store information about all connected connectable devices (3-1 - 3-n) and/or receptacles (5-1 - 5-n) which have been mounted using the information system (1-1, 1-2), and
wherein the processing device (10) is configured to display in the display (9) a list of connectable devices (3-1 - 3-n) which are not yet connected.

6. Information system according to any one of the preceding claims,
comprising a communication interface (16) which is coupled to the processing device (10), wherein the processing device (10) is configured to transmit via the communication interface (16) information (17) about the connectable devices (3-1 - 3-n) connected to one of the electrical devices (4-1 - 4-n) to said electrical device (4-1 - 4-n).

7. Information system according to any one of the preceding claims,
comprising a diagnosis unit (18) configured to inspect if all connectable devices (3-1 - 3-n) have been connected to the correct receptacles (5-1 - 5-n),
wherein the processing device (10) is configured to indicate in the display (9) movement directions in which the camera (7) has to be moved by the user in order for the processing device (10) to generate a list with all electrical devices (4-1 - 4-n) and/or connectable devices (3-1 - 3-n) and/or receptacles (5-1 - 5-n) into which connectable devices (3-1 - 3-n) have been mounted after they have been mounted,
wherein the diagnosis unit configured to inspect if all connectable devices (3-1 - 3-n) have been connected to the correct receptacles (5-1 - 5-n) based on said list.

8. Method for providing mounting information (2-1 - 2-n) for a number of connectable devices (3-1 - 3-n) and electrical devices (4-1 - 4-n) to a user, comprising:
recording (S1) a scene (8) with a camera (7),
identifying (S2) in the scene (8) a number of connectable devices (3-1 - 3-n) and/or receptacles (5-1 - 5-n),
overlaying (S3) the scene (8) with mounting information (2-1 - 2-n) for the identified connectable devices (3-1 - 3-n) and/or the identified receptacles (5-1 - 5-n),
displaying (S4) the scene (8) with the overlay information in a display (9), and
identifying (S6) the position and/or orientation (14) of the camera (7) in three dimensional space, and determining the position of the electrical devices (4-1 - 4-n) and/or the identified connectable devices (3-1 - 3-n) and/or the identified receptacles (5-1 - 5-n),
wherein the mounting information (2-1 - 2-n) is displayed at the position of the respective identified connectable devices (3-1 - 3-n) and/or the respective identified receptacles (5-1 - 5-n) on the display (9), and
**characterised in that** for all identified electrical devices (4-1 - 4-n) and/or the identified connectable devices (3-1 - 3-n) and/or the identified receptacles (5-1 - 5-n) the distance between the respective receptacles (5-1 - 5-n) which have to be connected by a connectable device (3-1 - 3-n) is calculated (S7) and it is verified (S8) prior to mounting if the connectable device (3-1 - 3-n) which is provided to connect the respective receptacles (5-1 - 5-n) is at least as long as the calculated distance.

9. Method according to claim 8,
wherein identifying comprises identifying the electrical devices (4-1 - 4-n) and/or connectable devices (3-1 - 3-n) and/or receptacles (5-1 - 5-n) by identifying an optical code (11-1 - 11-n) on the connectable devices (3-1 - 3-n) and/or receptacles (5-1 - 5-n),
the method further comprising storing (S5) for every optical code (11-1 - 11-n) the mounting information (2-1 - 2-n) of the respective connectable device (3-1 - 3-n) and/or receptacle (5-1 - 5-n).

10. Method according any one of the preceding claims 8 and 9,
wherein with the mounting information (2-1 - 2-n) of a connectable device (3-1 - 3-n) the direction (15) in which the respective receptacle (5-1 - 5-n) is located is indicated if the respective receptacle (5-1 - 5-n) for the connectable device (3-1 - 3-n) was already identified, and/or wherein with the mounting information (2-1 - 2-n) of a receptacle (5-1 - 5-n) the direction (15) in which the respective connectable device (3-1 - 3-n) is located is displayed if the respective connectable device (3-1 - 3-n) for the receptacle (5-1 - 5-n) was already identified.

11. Method according any one of the preceding claims 8 to 10,
wherein a connectable device (3-1 - 3-n) and/or a receptacle (5-1 - 5-n) which is positioned by the user in the middle of the camera view and/or scene (8) is marked (S9) as active connectable device (3-1 - 3-n) and/or receptacle (5-1 - 5-n), and wherein mounting information (2-1 - 2-n) is displayed only for the active connectable device (3-1 - 3-n) and/or receptacle (5-1 - 5-n), and/or
wherein information about all connected connectable devices (3-1 - 3-n) and/or receptacles (5-1 - 5-n) which have been mounted is subsequently stored, and wherein in the display (9) a list of connectable devices (3-1 - 3-n) which are not yet connected is displayed, and/or
wherein information (17) about the connectable devices (3-1 - 3-n) connected to one of the electrical devices (4-1 - 4-n) is transmitted (S10) to the respective electrical device (4-1 - 4-n).

12. Method according any one of the preceding claims 8 to 11, comprising inspecting (S1) if all connectable devices (3-1 - 3-n) have been connected to the correct receptacles (5-1 - 5-n), wherein in the display movement directions are indicated in which the camera (7) has to be moved by the user in order to generate a list with all electrical devices (4-1 - 4-n) and/or connectable devices (3-1 - 3-n) and/or receptacles (5-1 - 5-n) into which connectable devices (3-1 - 3-n) have already been mounted, wherein it is inspected if all connectable devices (3-1 - 3-n) have been connected to the correct receptacles (5-1 - 5-n) based on said list.

## Patentansprüche

1. Informationssystem (1-1, 1-2) zum Bereitstellen von Montageinformationen (2-1 - 2-n) für eine Anzahl von verbindbaren Vorrichtungen (3-1 - 3-n) und elektrischen Vorrichtungen (4-1 - 4-n) für einen Benutzer, das Folgendes umfasst:
eine Kamera (7), die dazu ausgelegt ist, eine Szene (8) aufzuzeichnen,
eine Anzeige (9),
eine Verarbeitungsvorrichtung (10), die an die Kamera (7) und die Anzeige (9) gekoppelt und dazu ausgelegt ist, die Szene (8) auf der Anzeige (9) anzuzeigen, und in der Szene (8) eine Anzahl von verbindbaren Vorrichtungen (3-1 - 3-n) und/oder Steckerbuchsen (5-1 - 5-n) zu identifizieren, und die Szene (8) auf der Anzeige (9) mit Montageinformationen (2-1 - 2-n) für die identifizierten verbindbaren Vorrichtungen (3-1 - 3-n) und/oder die identifizierten Steckerbuchsen (5-1 - 5-n) zu überlagern, und
einen Positionssensor (13), der dazu ausgelegt ist, die Position und/oder die Ausrichtung (14) der Kamera (7) in einem dreidimensionalen Raum zu identifizieren,
wobei die Verarbeitungsvorrichtung (10) dazu ausgelegt ist, die Position der elektrischen Vorrichtungen (4-1 - 4-n) und/oder der identifizierten verbindbaren Vorrichtungen (3-1 - 3-n) und/oder der identifizierten Steckerbuchsen (5-1 - 5-n) zu bestimmen,
wobei die Verarbeitungsvorrichtung (10) dazu ausgelegt ist, die Montageinformationen (2-1 - 2-n) an der Position der jeweiligen identifizierten verbindbaren Vorrichtungen (3-1 - 3-n) und/oder der jeweiligen identifizierten Steckerbuchsen (5-1 - 5-n) auf der Anzeige (9) anzuzeigen, und
**dadurch gekennzeichnet, dass**
die Verarbeitungsvorrichtung (10) dazu ausgelegt ist, für alle identifizierten elektrischen Vorrichtungen (4-1 - 4-n) und/oder die identifizierten verbindbaren Vorrichtungen (3-1 - 3-n) und/oder die identifizierten Steckerbuchsen (5-1 - 5-n) den Abstand zwischen den jeweiligen Steckerbuchsen (5-1 - 5-n), die mit einer verbindbaren Vorrichtung (3-1 - 3-n) zu verbinden sind, zu berechnen und vor der Montage zu verifizieren, ob die verbindbare Vorrichtung (3-1 - 3-n), die zum Verbinden der jeweiligen Steckerbuchsen (5-1 - 5-n) bereitgestellt ist, mindestens so lang ist wie der berechnete Abstand.

2. Informationssystem nach Anspruch 1,
wobei die Verarbeitungsvorrichtung (10) dazu ausgelegt ist, die elektrischen Vorrichtungen (4-1 - 4-n) und/oder die verbindbaren Vorrichtungen (3-1 - 3-n) und/oder die Steckerbuchsen (5-1 - 5-n) durch Identifizieren eines optischen Codes (11-1 - 11-n) an den verbindbaren Vorrichtungen (3-1 - 3-n) und/oder den Steckerbuchsen (5-1 - 5-n) zu identifizieren,
wobei das Informationssystem (1-1, 1-2) eine Datenbank (12) umfasst, die dazu ausgelegt ist, für jeden optischen Code (11-1 - 11-n) die Montageinformationen (2-1 - 2-n) der jeweiligen verbindbaren Vorrichtung (3-1 - 3-n) und/oder Steckerbuchse (5-1 - 5-n) zu speichern.

3. Informationssystem nach Anspruch 1,
wobei die Verarbeitungsvorrichtung (10) dazu ausgelegt ist, mit den Montageinformationen (2-1 - 2-n) einer verbindbaren Vorrichtung (3-1 - 3-n) die Richtung (15) anzugeben, in der sich die jeweilige Steckerbuchse (5-1 - 5-n) befindet, wenn die jeweilige Steckerbuchse (5-1 - 5-n) für die verbindbare Vorrichtung (3-1 - 3-n) bereits identifiziert wurde, und/oder
wobei die Verarbeitungsvorrichtung (10) dazu ausgelegt ist, mit den Montageinformationen (2-1 - 2-n) einer Steckerbuchse (5-1 - 5-n) die Richtung (15) anzugeben, in der sich die jeweilige verbindbare Vorrichtung (3-1 - 3-n) befindet, wenn die jeweilige verbindbare Vorrichtung (3-1 - 3-n) für die Steckerbuchse (5-1 - 5-n) bereits identifiziert wurde.

4. Informationssystem nach einem der vorhergehenden Ansprüche,
wobei die Verarbeitungsvorrichtung (10) dazu ausgelegt ist, eine verbindbare Vorrichtung (3-1 - 3-n) und/oder eine Steckerbuchse (5-1 - 5-n), die vom Benutzer in der Mitte der Kamerasicht und/oder Szene (8) positioniert ist, als aktive verbindbare Vorrichtung (3-1 - 3-n) und/oder Steckerbuchse (5-1 - 5-n) zu markieren, und
wobei die Verarbeitungsvorrichtung (10) dazu ausgelegt ist, Montageinformationen (2-1 - 2-n) nur für die aktive verbindbare Vorrichtung (3-1 - 3-n) und/oder Steckerbuchse (5-1 - 5-n) anzuzeigen.

5. Informationssystem nach einem der vorhergehenden Ansprüche,
wobei die Verarbeitungsvorrichtung (10) dazu ausgelegt ist, Informationen über alle verbundenen verbindbaren Vorrichtungen (3-1 - 3-n) und/oder Steckerbuchsen (5-1 - 5-n), die unter Verwendung des Informationssystems (1-1, 1-2) montiert wurden, anschließend zu speichern, und
wobei die Verarbeitungsvorrichtung (10) dazu ausgelegt ist, eine Liste von verbindbaren Vorrichtungen (3-1 - 3-n), die noch nicht verbunden sind, auf der Anzeige (9) anzuzeigen.

6. Informationssystem nach einem der vorhergehenden Ansprüche,
das eine Kommunikationsschnittstelle (16) umfasst, die an die Verarbeitungsvorrichtung (10) gekoppelt ist, wobei die Verarbeitungsvorrichtung (10) dazu ausgelegt ist, Informationen (17) über die verbindbaren Vorrichtungen (3-1 - 3-n), die mit einer der elektrischen Vorrichtungen (4-1 - 4-n) verbunden sind, via die Kommunikationsschnittstelle (16) zur elektrischen Vorrichtung (4-1 - 4-n) zu übertragen.

7. Informationssystem nach einem der vorhergehenden Ansprüche,
das eine Diagnoseeinheit (18) umfasst, die dazu ausgelegt ist zu prüfen, ob alle verbindbaren Vorrichtungen (3-1 - 3-n) mit den richtigen Steckerbuchsen (5-1 - 5-n) verbunden wurden,
wobei die Verarbeitungsvorrichtung (10) dazu ausgelegt ist, Bewegungsrichtungen, in die die Kamera (7) vom Benutzer bewegt werden muss, damit die Verarbeitungsvorrichtung (10) eine Liste mit allen elektrischen Vorrichtungen (4-1 - 4-n) und/oder verbindbaren Vorrichtungen (3-1 - 3-n) und/oder Steckerbuchsen (5-1 - 5-n), in die verbindbare Vorrichtungen (3-1 - 3-n) montiert wurden, auf der Anzeige (9) anzugeben, nachdem sie montiert wurden,
wobei die Diagnoseeinheit dazu ausgelegt ist, auf Basis der Liste zu prüfen, ob alle verbindbaren Vorrichtungen (3-1 - 3-n) mit den richtigen Steckerbuchsen (5-1 - 5-n) verbunden wurden.

8. Verfahren zum Bereitstellen von Montageinformationen (2-1 - 2-n) für eine Anzahl von verbindbaren Vorrichtungen (3-1 - 3-n) und elektrischen Vorrichtungen (4-1 - 4-n) für einen Benutzer, das Folgendes umfasst:
Aufzeichnen (S1) einer Szene (8) mit einer Kamera (7),
Identifizieren (S2) einer Anzahl von verbindbaren Vorrichtungen (3-1 - 3-n) und/oder Steckerbuchsen (5-1 - 5-n) in der Szene (8),
Überlagern (S3) der Szene (8) mit Montageinformationen (2-1 - 2-n) für die identifizierten verbindbaren Vorrichtungen (3-1 - 3-n) und/oder die identifizierten Steckerbuchsen (5-1 - 5-n),
Anzeigen (S4) der Szene (8) mit den überlagerten Informationen auf einer Anzeige (9), und
Identifizieren (S6) der Position und/oder der Ausrichtung (14) der Kamera (7) in einem dreidimensionalen Raum, und Bestimmen der Position der elektrischen Vorrichtungen (4-1 - 4-n) und/oder der identifizierten verbindbaren Vorrichtungen (3-1 - 3-n) und/oder der identifizierten Steckerbuchsen (5-1 - 5-n),
wobei die Montageinformationen (2-1 - 2-n) an der Position der jeweiligen identifizierten verbindbaren Vorrichtungen (3-1 - 3-n) und/oder der jeweiligen identifizierten Steckerbuchsen (5-1 - 5-n) auf der Anzeige (9) angezeigt werden, und
**dadurch gekennzeichnet, dass**
für alle identifizierten elektrischen Vorrichtungen (4-1 - 4-n) und/oder die identifizierten verbindbaren Vorrichtungen (3-1 - 3-n) und/oder die identifizierten Steckerbuchsen (5-1 - 5-n) der Abstand zwischen den jeweiligen Steckerbuchsen (5-1 - 5-n), die mit einer verbindbaren Vorrichtung (3-1 - 3-n) zu verbinden sind, berechnet (S7) und vor der Montage verifiziert (S8) wird, ob die verbindbare Vorrichtung (3-1 - 3-n), die zum Verbinden der jeweiligen Steckerbuchsen (5-1 - 5-n) bereitgestellt ist, mindestens so lang ist wie der berechnete Abstand.

9. Verfahren nach Anspruch 8,
wobei das Identifizieren das Identifizieren der elektrischen Vorrichtungen (4-1 - 4-n) und/oder der verbindbaren Vorrichtungen (3-1 - 3-n) und/oder der Steckerbuchsen (5-1 - 5-n) durch Identifizieren eines optischen Codes (11-1 - 11-n) an den verbindbaren Vorrichtungen (3-1 - 3-n) und/oder den Steckerbuchsen (5-1 - 5-n) umfasst,
wobei das Verfahren ferner das Speichern (S5) der Montageinformationen (2-1 - 2-n) der jeweiligen verbindbaren Vorrichtung (3-1 - 3-n) und/oder Steckerbuchse (5-1 - 5-n) für jeden optischen Code (11-1 - 11-n) umfasst.

10. Verfahren nach einem der vorhergehenden Ansprüche 8 und 9,
wobei mit den Montageinformationen (2-1 - 2-n) einer verbindbaren Vorrichtung (3-1 - 3-n) die Richtung (15), in der sich die jeweilige Steckerbuchse (5-1 - 5-n) befindet, angegeben ist, wenn die jeweilige Steckerbuchse (5-1 - 5-n) für die verbindbare Vorrichtung (3-1 - 3-n) bereits identifiziert wurde, und/oder wobei mit den Montageinformationen (2-1 - 2-n) einer Steckerbuchse (5-1 - 5-n) die Richtung (15), in der sich die jeweilige verbindbare Vorrichtung (3-1 - 3-n) befindet, angezeigt wird, wenn die jeweilige verbindbare Vorrichtung (3-1 - 3-n) für die Steckerbuchse (5-1 - 5-n) bereits identifiziert wurde.

11. Verfahren nach einem der vorhergehenden Ansprüche 8 bis 10,
wobei eine verbindbare Vorrichtung (3-1 - 3-n) und/oder eine Steckerbuchse (5-1 - 5-n), die vom Benutzer in der Mitte der Kamerasicht und/oder Szene (8) positioniert ist, als aktive verbindbare Vorrichtung (3-1 - 3-n) und/oder Steckerbuchse (5-1 - 5-n) markiert (S9) wird und wobei Montageinformationen (2-1 - 2-n) nur für die aktive verbindbare Vorrichtung (3-1 - 3-n) und/oder Steckerbuchse (5-1 - 5-n) angezeigt werden, und/oder
wobei Informationen über alle verbundenen verbindbaren Vorrichtungen (3-1 - 3-n) und/oder Steckerbuchsen (5-1 - 5-n), die montiert wurden, anschließend gespeichert werden, und wobei auf der Anzeige (9) eine Liste von verbindbaren Vorrichtungen (3-1 - 3-n), die noch nicht verbunden sind, angezeigt wird, und/oder
wobei Informationen (17) über die verbindbaren Vorrichtungen (3-1 - 3-n), die mit einer der elektrischen Vorrichtungen (4-1 - 4-n) verbunden sind, zur jeweiligen elektrischen Vorrichtung (4-1 - 4-n) übertragen (S10) werden.

12. Verfahren nach einem der vorhergehenden Ansprüche 8 bis 11, das das Prüfen (S11), ob alle verbindbaren Vorrichtungen (3-1 - 3-n) mit den richtigen Steckerbuchsen (5-1 - 5-n) verbunden wurden, umfasst, wobei auf der Anzeige Bewegungsrichtungen angegeben werden, in die die Kamera (7) vom Benutzer zu bewegen ist, um eine Liste mit allen elektrischen Vorrichtungen (4-1 - 4-n) und/oder verbindbaren Vorrichtungen (3-1 - 3-n) und/oder Steckerbuchsen (5-1 - 5-n) in die die verbindbaren Vorrichtungen (3-1 - 3-n) bereits montiert wurden, zu erzeugen, wobei auf Basis der Liste geprüft wird, ob alle verbindbaren Vorrichtungen (3-1 - 3-n) mit den richtigen Steckerbuchsen (5-1 - 5-n) verbunden wurden.

## Revendications

1. Système d'information (1-1, 1-2) destiné à fournir une information de montage (2-1 - 2-n) pour un certain nombre de dispositifs raccordables (3-1 - 3-n) et dispositifs électriques (4-1 - 4-n) à un utilisateur, qui comprend :
une caméra (7) configurée pour enregistrer une scène (8),
un afficheur (9),
un dispositif de traitement (10) couplé à la caméra (7) et à l'afficheur (9), et configuré pour afficher la scène (8) dans l'afficheur (9) et pour identifier dans la scène (8) un certain nombre de dispositifs raccordables (3-1 - 3-n) et/ou réceptacles (5-1 - 5-n) et pour recouvrir la scène (8) dans l'afficheur (9) avec une information de montage (2-1 - 2-n) pour les dispositifs raccordables (3-1 - 3-n) identifiés et/ou les réceptacles (5-1 - 5-n) identifiés, et
un capteur d'emplacement (13) configuré pour identifier l'emplacement et/ou orientation (14) de la caméra (7) dans un espace tridimensionnel,
dans lequel le dispositif de traitement (10) est configuré pour déterminer l'emplacement des dispositifs électriques (4-1 - 4-n) et/ou des dispositifs raccordables (3-1 - 3-n) identifiés et/ou des réceptacles (5-1 - 5-n) identifiés,
dans lequel le dispositif de traitement (10) est configuré pour afficher l'information de montage (2-1 - 2-n) à l'emplacement des dispositifs raccordables (3-1 - 3-n) identifiés respectifs et/ou des réceptacles (5-1 - 5-n) identifiés respectifs sur l'afficheur (9), et
**caractérisé en ce que**
le dispositif de traitement (10) est configuré pour calculer pour tous les dispositifs électriques (4-1 - 4-n) identifiés et/ou les dispositifs raccordables (3-1 - 3-n) identifiés et/ou les réceptacles (5-1 - 5-n) identifiés la distance entre les réceptacles (5-1 - 5-n) respectifs qui doivent être raccordés par un dispositif raccordable (3-1 - 3-n), et vérifier avant le montage que le dispositif raccordable (3-1 - 3-n) qui est prévu pour raccorder les réceptacles (5-1 - 5-n) respectifs est au moins aussi long que la distance calculée.

2. Système d'information selon la revendication 1,
dans lequel le dispositif de traitement (10) est configuré pour identifier les dispositifs électriques (4-1 - 4-n) et/ou dispositifs raccordables (3-1 - 3-n) et/ou réceptacles (5-1 - 5-n) en identifiant un code optique (11-1 - 11-n) sur les dispositifs raccordables (3-1 - 3-n) et/ou réceptacles (5-1 - 5-n),
dans lequel le système d'information (1-1, 1-2) comprend une base de données (12) configurée pour stocker pour chaque code optique (11-1 - 11-n) l'information de montage (2-1 - 2-n) du dispositif raccordable (3-1 - 3-n) et/ou réceptacle (5-1 - 5-n) respectifs.

3. Système d'information selon la revendication 1,
dans lequel le dispositif de traitement (10) est configuré pour indiquer avec l'information de montage (2-1 - 2-n) d'un dispositif raccordable (3-1 - 3-n) la direction (15) dans laquelle le réceptacle (5-1 - 5-n) respectif est située si le réceptacle (5-1 - 5-n) respectif pour le dispositif raccordable (3-1 - 3-n) a déjà été identifié, et/ou
dans lequel le dispositif de traitement (10) est configuré pour indiquer avec l'information de montage (2-1 - 2-n) d'un réceptacle (5-1 - 5-n) la direction (15) dans laquelle le dispositif raccordable (3-1 - 3-n) respectif est située si le dispositif raccordable (3-1 - 3-n) respectif pour le réceptacle (5-1 - 5-n) a déjà été identifié.

4. Système d'information selon l'une quelconque des revendications précédentes,
dans lequel le dispositif de traitement (10) est configuré pour marquer un dispositif raccordable (3-1 - 3-n) et/ou un réceptacle (5-1 - 5-n) qui est positionné par l'utilisateur au milieu de la vue de caméra et/ou scène (8) en tant que dispositif raccordable (3-1 - 3-n) et/ou réceptacle (5-1 - 5-n) actifs, et
dans lequel le dispositif de traitement (10) est configuré pour afficher une information de montage (2-1 - 2-n) uniquement pour le dispositif raccordable (3-1 - 3-n) et/ou réceptacle (5-1 - 5-n) actifs.

5. Système d'information selon l'une quelconque des revendications précédentes,
dans lequel le dispositif de traitement (10) est configuré pour ensuite stocker une information relative à tous les dispositifs raccordables (3-1 - 3-n) et/ou réceptacles (5-1 - 5-n) raccordés qui ont été montés à l'aide du système d'information (1-1, 1-2), et
dans lequel le dispositif de traitement (10) est configuré pour afficher dans l'afficheur (9) une liste de dispositifs raccordables (3-1 - 3-n) qui ne sont pas encore raccordés.

6. Système d'information selon l'une quelconque des revendications précédentes,
qui comprend une interface de communication (16) qui est couplée au dispositif de traitement (10), dans lequel le dispositif de traitement (10) est configuré pour transmettre via l'interface de communication (16) une information (17) relative aux dispositifs raccordables (3-1 - 3-n) raccordés à l'un des dispositifs électriques (4-1 - 4-n) audit dispositif électrique (4-1 - 4-n).

7. Système d'information selon l'une quelconque des revendications précédentes,
qui comprend une unité de diagnostic (18) configurée pour contrôler que tous les dispositifs raccordables (3-1 - 3-n) ont été raccordés aux bons réceptacles (5-1 - 5-n),
dans lequel le dispositif de traitement (10) est configuré pour indiquer dans l'afficheur (9) que des directions de déplacement dans lesquelles la caméra (7) doit être déplacée par l'utilisateur afin que le dispositif de traitement (10) produise une liste avec tous les dispositifs électriques (4-1 - 4-n) et/ou dispositifs raccordables (3-1 - 3-n) et/ou réceptacles (5-1 - 5-n) dans lesquels des dispositifs raccordables (3-1 - 3-n) ont été montés après qu'ils ont été montés,
dans lequel l'unité de diagnostic est configurée pour contrôler que tous les dispositifs raccordables (3-1 - 3-n) ont été raccordés aux bons réceptacles (5-1 - 5-n) sur la base de ladite liste.

8. Procédé destiné à fournir une information de montage (2-1 - 2-n) pour un certain nombre de dispositifs raccordables (3-1 - 3-n) et dispositifs électriques (4-1 - 4-n) à un utilisateur, qui comprend :
l'enregistrement (S1) d'une scène (8) avec une caméra (7),
l'identification (S2) dans la scène (8) d'un certain nombre de dispositifs raccordables (3-1 - 3-n) et/ou réceptacles (5-1 - 5-n),
le recouvrement (S3) de la scène (8) avec une information de montage (2-1 - 2-n) pour les dispositifs raccordables (3-1 - 3-n) identifiés et/ou les réceptacles (5-1 - 5-n) identifiés,
l'affichage (S4) de la scène (8) avec l'information de recouvrement dans un afficheur (9), et
l'identification (S6) de l'emplacement et/ou orientation (14) de la caméra (7) dans un espace tridimensionnel, et la détermination de l'emplacement des dispositifs électriques (4-1 - 4-n) et/ou des dispositifs raccordables (3-1 - 3-n) identifiés et/ou des réceptacles (5-1 - 5-n) identifiés,
dans lequel l'information de montage (2-1 - 2-n) est affichée à l'emplacement des dispositifs raccordables (3-1 - 3-n) identifiés respectifs et/ou des réceptacles (5-1 - 5-n) identifiés respectifs sur l'afficheur (9), et
**caractérisé en ce que**
pour tous les dispositifs électriques (4-1 - 4-n) identifiés et/ou les dispositifs raccordables (3-1 - 3-n) identifiés et/ou les réceptacles (5-1 - 5-n) identifiés la distance entre les réceptacles (5-1 - 5-n) respectifs qui doivent être raccordés par un dispositif raccordable (3-1 - 3-n) est calculée (S7) et il est vérifié (S8) avant le montage que le dispositif raccordable (3-1 - 3-n) qui est prévu pour raccorder les réceptacles (5-1 - 5-n) respectifs est au moins aussi long que la distance calculée.

9. Procédé selon la revendication 8,
dans lequel l'identification comprend l'identification des dispositifs électriques (4-1 - 4-n) et/ou dispositifs raccordables (3-1 - 3-n) et/ou réceptacles (5-1 - 5-n) en identifiant un code optique (11-1 - 11-n) sur les dispositifs raccordables (3-1 - 3-n) et/ou réceptacles (5-1 - 5-n),
le procédé comprenant en outre le stockage (S5) pour chaque code optique (11-1 - 11-n) de l'information de montage (2-1 - 2-n) du dispositif raccordable (3-1 - 3-n) et/ou réceptacle (5-1 - 5-n) respectifs.

10. Procédé selon l'une quelconque des revendications précédentes 8 et 9, dans lequel avec l'information de montage (2-1 - 2-n) d'un dispositif raccordable (3-1 - 3-n) la direction (15) dans laquelle le réceptacle (5-1 - 5-n) respectif est située est indiquée si le réceptacle (5-1 - 5-n) respectif pour le dispositif raccordable (3-1 - 3-n) a déjà été identifié, et/ou dans lequel avec l'information de montage (2-1 - 2-n) d'un réceptacle (5-1 - 5-n) la direction (15) dans laquelle le dispositif raccordable (3-1 - 3-n) respectif est située est affichée si le dispositif raccordable (3-1 - 3-n) respectif pour le réceptacle (5-1 - 5-n) a déjà été identifié.

11. Procédé selon l'une quelconque des revendications précédentes 8 à 10,
dans lequel un dispositif raccordable (3-1 - 3-n) et/ou un réceptacle (5-1 - 5-n) qui est positionné par l'utilisateur au milieu de la vue de caméra et/ou scène (8) est marqué (S9) en tant que dispositif raccordable (3-1 - 3-n) et/ou réceptacle (5-1 - 5-n) actifs, et dans lequel une information de montage (2-1 - 2-n) est affichée uniquement pour le dispositif raccordable (3-1 - 3-n) et/ou réceptacle (5-1 - 5-n) actifs, et/ou
dans lequel une information relative à tous les dispositifs raccordables (3-1 - 3-n) et/ou réceptacles (5-1 - 5-n) raccordés qui ont été montés est ensuite stockée, et dans lequel dans l'afficheur (9) une liste de dispositifs raccordables (3-1 - 3-n) qui ne sont pas encore raccordés est affichée, et/ou
dans lequel une information (17) relative aux dispositifs raccordables (3-1 - 3-n) raccordés à l'un des dispositifs électriques (4-1 - 4-n) est transmise (S10) au dispositif électrique (4-1 - 4-n) respectif.

12. Procédé selon l'une quelconque des revendications précédentes 8 à 11, qui comprend le fait de contrôler (S11) que tous les dispositifs raccordables (3-1 - 3-n) ont été raccordés aux bons réceptacles (5-1 - 5-n), dans lequel dans l'afficheur des directions de déplacement sont indiquées dans lesquelles la caméra (7) doit être déplacée par l'utilisateur afin de produire une liste avec tous les dispositifs électriques (4-1 - 4-n) et/ou dispositifs raccordables (3-1 - 3-n) et/ou réceptacles (5-1 - 5-n) dans lesquels des dispositifs raccordables (3-1 - 3-n) ont déjà été montés, dans lequel il est contrôlé que tous les dispositifs raccordables (3-1 - 3-n) ont été raccordés aux bons réceptacles (5-1 - 5-n) sur la base de ladite liste.
